# EUROPEAN PATENT SPECIFICATION

(11) **EP 2 552 078 B1**
(45) Date of publication and mention of the grant of the patent: **19.09.2018**
(21) Application number: 12177974.8
(22) Date of filing: 26.07.2012
(51) Int. Cl.: H04L 29/06, H04W 12/02, G10L 17/00

(54) **System and Method for Identification of Wireless Communication Terminals using Speaker Recognition**
System und Verfahren zur Identifikation eines drahtlosen Kommunikationsendgerätes mit Sprechererkennung
Système et procédé d'identification de terminaux de communication sans fil utilisant la reconnaissance du locuteur

(30) Priority: 26.07.2011 IL 21429711
(43) Date of publication of application: 30.01.2013
(73) Proprietor: Verint Systems Limited, Pituach (IL)
(72) Inventor: Ariav, Yoav, 44206 Kfar saba (IL); Goldfarb, Eithan, 74057 Ness Ziona (IL)
(74) Representative: Smallman, Clint Guy

(56) References cited:
- EP-A2- 1 096 474
- WO-A1-03/088634
- WO-A1-2007/105193
- US-A1- 2011 150 211
- "Talking up voice biometrics", BIOMETRIC TECHNOLOGY TODAY, SJB SERVICES, SOMERTON, GB, vol. 14, no. 7-8, 1 July 2006 (2006-07-01) , pages 9-11, XP027993519, ISSN: 0969-4765 [retrieved on 2006-07-01]

## Description

### FIELD OF THE DISCLOSURE

The present disclosure relates generally to communication monitoring, and particularly to methods and systems for identifying wireless communication terminals using speaker recognition.

### BACKGROUND OF THE DISCLOSURE

Various speaker recognition techniques are known in the art. For example, Reynolds and Rose describe text-independent speaker identification techniques, in "Robust Text-Independent Speaker Identification using Gaussian Mixture Speaker Models," IEEE Transactions on Speech and Audio Processing, volume 3, no. 1, January, 1995. Another technique is described by Monte et al., in "Text-Independent Speaker Identification on Noisy Environments by Means of Self Organizing Maps," Proceedings of the Fourth International Conference on Spoken Language (ICSLP), October, 1996.

WO 2007/105193A1 discloses a method and apparatus for capturing a communication item according to an interception criteria and then analyzing a captured communication item using an analysis engine.

### SUMMARY OF THE DISCLOSURE

According to the invention, there is provided a method comprising: holding in a memory respective digital voice signatures of individuals; monitoring voice calls conducted by wireless communication terminals in a wireless communication network, and extracting speech content from the monitored voice calls; and identifying a wireless communication terminal that is operated by one of the individuals by comparing the speech content extracted from the voice calls of the terminal to the voice signatures, characterized in that monitoring the voice calls comprises extracting from the voice calls respective identifiers of the wireless communication terminals, and wherein identifying the wireless communication terminal comprises associating between the one of the individuals and an extracted identifier of the identified wireless communication terminal. In some embodiments, monitoring the voice calls includes receiving wireless signals that carry the voice calls and are exchanged between the wireless communication terminals and one or more base stations of the wireless communication network. In an embodiment, monitoring the voice calls includes receiving the voice calls passively without affecting the wireless communication network. In a disclosed embodiment, at least some of the voice calls in the wireless communication network are encrypted, and monitoring the voice calls includes decrypting the encrypted voice calls so as to enable extraction of the speech content. In another embodiment, monitoring the voice calls and extracting the speech content include indiscriminately processing all receivable voice calls.

In another embodiment, the extracted identifier includes a temporary identifier that is assigned temporarily by the wireless communication network to the identified wireless communication terminal. The extracted identifier may be Temporary Mobile Subscriber Identity (TMSI).

In yet another embodiment, the method includes outputting an association between the identified terminal and the one of the target individuals. In an embodiment, the method includes tracking the one of the target individuals based on the association.

There is additionally provided, in accordance with an embodiment that is described herein, apparatus including a memory, a receiver and a processor. The memory is configured to hold digital voice signatures of respective target individuals. The receiver is configured to monitor voice calls conducted by wireless communication terminals in a wireless communication network. The processor is configured to extract speech content from the monitored voice calls, and to identify a wireless communication terminal that is operated by one of the target individuals, by comparing the speech content extracted from the voice calls of the terminal to the voice signatures.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a system for passive monitoring of wireless communication terminals, in accordance with an embodiment that is described herein; and
Fig. 2 is a flow chart that schematically illustrates a method for passive monitoring of wireless communication terminals, in accordance with an embodiment that is described herein.

### DETAILED DESCRIPTION OF EMBODIMENTS

### OVERVIEW

Embodiments that are described herein provide improved methods and systems for monitoring communication of wireless communication terminals such as cellular phones. The disclosed techniques identify wireless communication terminals that are operated by target individuals, by comparing speech content that is extracted from voice calls of the terminals to known voice signatures of the target individuals.

In some embodiments, a passive monitoring system monitors voice calls that are conducted by wireless communication terminals in a wireless communication network. Some of the terminals may be operated by individuals who are defined as targets for surveillance, but the association between the target individuals and the terminals may not be known. For example, a target individual may use a prepaid Subscriber Identity Module (SIM) that was never used before in order to evade surveillance.

Moreover, in most network types the over-the-air communication with the terminal rarely indicates permanent identifiers of the terminal such as International Mobile Subscriber Identities (IMSI), International Mobile Equipment Identities (IMEI) or Mobile Subscriber Integrated Services Digital Network Number (MSISDN typically corresponding to the telephone number associated with the terminal). Other than on rare occasions, the over-the-air communication indicates temporary identifiers, such as Temporary Mobile Subscriber Identities (TMSI). Therefore, it is difficult for a passive monitoring system to correlate target individuals with the terminals they use, because the system usually intercepts temporary identifiers.

In order to find terminals that are operated by target individuals, the system extracts speech content from the monitored voice calls and compares the speech content to known digital voice signatures of the target individuals. If a match is found, the system concludes that the matching speech content originates from a terminal that is operated by a target individual. Based on the voice signature matching, the system is able to correlate the temporary terminal identifier (e.g., TMSI) with the target individual, and to enable tracking of that TMSI until association with a permanent terminal identifier is available.

Once a terminal is identified as being operated by a target individual, the terminal can be tracked using any suitable method in order to collect information related to this individual. In a typical application, the system is able to produce the temporary identifiers of the terminal (e.g., TMSI) within seconds, so as to enable real-time tracking and surveillance. The disclosed techniques are thus particularly suitable for passive, off-the-air monitoring systems.

### SYSTEM DESCRIPTION

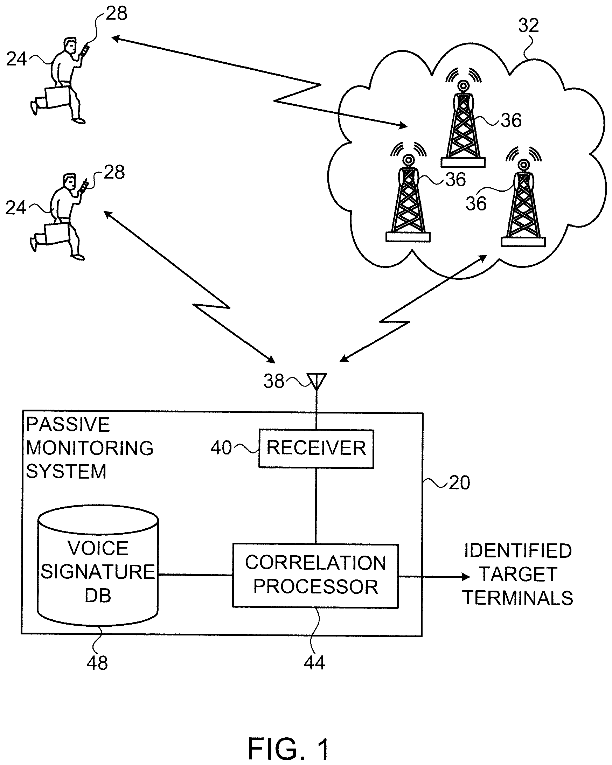

Fig. 1 is a block diagram that schematically illustrates a system 20 for passive monitoring of wireless communication terminals 28 operated by users or individuals 24, in accordance with an embodiment that is described herein. In particular, system 20 uses methods that are described below to identify terminals that are operated by certain individuals who are defined as targets. Systems of this sort may be operated, for example, by intelligence or law enforcement agencies in order to track suspect individuals, or by any other entity for any other purpose.

Terminals 28 communicate over a wireless communication network 32. Terminals 28 may comprise, for example, cellular phones, wireless-enabled mobile computers or Personal Digital Assistants (PDAs), or any other suitable type of communication terminals. Network 32 may comprise, for example, a cellular network such as a Global System for Mobile communication (GSM) or Universal Mobile Telecommunications System (UMTS) network, a Wireless Local-Area Network (WLAN - also referred to as Wi-Fi network), or any other suitable network type. In the present example, network 32 comprises a cellular network that comprises multiple base stations 36 with which terminals 28 communicate.

System 20 monitors voice calls that are conducted by terminals 28 over network 32. In the embodiment of Fig. 1, system 20 is passive, i.e., monitors the communication using reception only without transmitting to network 32 or otherwise affecting the network operation. In alternative embodiments, however, the disclosed techniques can be applied in active monitoring systems, as well. In the embodiment of Fig. 1, system 20 monitors the voice calls off-the-air, i.e., by receiving wireless signals that are exchanged between terminals 28 and base stations 36. Alternatively, system 20 may monitor the voice calls using other mechanisms, such as by tapping one or more of the wire-line interfaces within network 32.

In the present example, system 20 comprises a receiver 40 that receives wireless signals from network 32 via a receive antenna 38. System 20 further comprises a correlation processor 44 that carries out the methods described herein, and a voice signature database 48.

Database 48 holds digital voice signatures of target individuals. The term "voice signature" refers to any information that is uniquely indicative of the voice characteristics of a certain target individual, such that comparing digitized speech to the voice signature enables deciding with high likelihood whether the digitized speech was enunciated by the target individual. Voice signatures are sometimes referred to as voiceprints. The voice signatures in database 48 may be produced or provided to system 20 in any suitable way.

Receiver 40 processes the signals received from network 32, so as to decode voice calls that are conducted by terminals 28. The receiver extracts digitized speech content from the calls. In addition, the receiver extracts one or more identifiers of the terminals conducting the calls. Extracted identifiers typically comprise temporary identifiers that are assigned temporarily by network 32 to the terminals and transmitted over the air. In GSM and UMTS networks, for example, temporary identifiers typically comprise TMSI. In WLANs, temporary identifiers typically comprise Internet Protocol (IP) addresses of the terminals. Alternatively, any other suitable identifiers can be used. Receiver 40 provides the speech content, and the corresponding identifiers of the terminals from which the speech content originated, to correlation processor 44.

In some embodiments, the over-the-air communication between terminals and base stations 36 is encrypted. In these embodiments, receiver 40 decrypts the received voice calls in real time, and then extracts the speech content from the decrypted calls. The encryption scheme may differ from one network type to another. GSM networks, for example, typically use A5.0/A5.1/A5.2 encryption, UMTS networks typically use A5.3 encryption, while WLANs typically use WEP/WPA encryption. Alternatively, receiver 40 may decrypt any other suitable encryption scheme that is used in network 32.

Thus, in some embodiments receiver 40 is modular and comprises multiple modules (not shown) - e.g., one or more Radio frequency (RF) modules for receiving signals from network 32, and one or more decryption modules for decrypting the over-the-air encryption.

Processor 44 compares the speech content extracted from the voice calls to the voice signatures stored in database 48. In this comparison, processor 44 attempts to find speech content that matches one of the signatures. If certain speech content is found to match a given voice signature, processor 44 concludes that the terminal from which the speech content originated is operated by the target individual whose voice signature was found to match the speech content. Thus, processor 44 associates the temporary identifier or identifiers of this terminal with the target individual.

In some embodiments, processor 44 later associates the temporary identifiers extracted from the over-the-air communication with permanent identifiers of the terminals. This stage is often not performed in real time. In GSM and UMTS networks, for example, the terminal TMSI may later be associated with IMSI or MSISDN. As another example, in a WLAN, the terminal's IP address may later be associated with a Medium Access Control (MAC) address.

The voice-signature based correlation techniques described herein enable system 20 to associate terminal identifiers with target individuals, even in the absence of any prior knowledge regarding such an association. For example, suspect individuals often use new cellular phones or prepaid Subscriber Identity Modules (SIM) that was never used before in order to evade surveillance. Using the disclosed correlation technique, system 20 is able to associate new identifiers with known target individuals based on voice signature matching. As described above, the disclosed techniques assist passive monitoring systems to correlate temporary terminal identifiers (e.g., TMSI or IP address) with target individuals, so as to enable tracking of the terminals until association with a permanent identifier (e.g., IMSI or MAC address) is available.

Processor 44 may act upon the identified associations between terminals and target individuals in any desired way. For example, the processor may output the associations to an operator or to another system for further analysis. The processor may issue an alert upon finding a new association, or perform any other suitable action. The correlation process carried out by processor 44 is typically fast, and produces correlations within seconds. Therefore, the disclosed techniques are particularly suitable for real-time surveillance applications.

The configuration of system 20 shown in Fig. 1 is an example configuration, which is chosen purely for the sake of conceptual clarity. In alternative embodiments, any other suitable system configuration can also be used. Some elements of system 20 may be implemented in hardware, e.g., in one or more Application-Specific Integrated Circuits (ASICs) or Field-Programmable Gate Arrays (FPGAs). Additionally or alternatively, some system elements can be implemented using software, or using a combination of hardware and software elements. Signature database 48 may be implemented using any suitable type of memory, such as using one or more magnetic or solid state memory devices.

Typically, processor 44 comprises a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### MONITORING METHOD DESCRIPTION

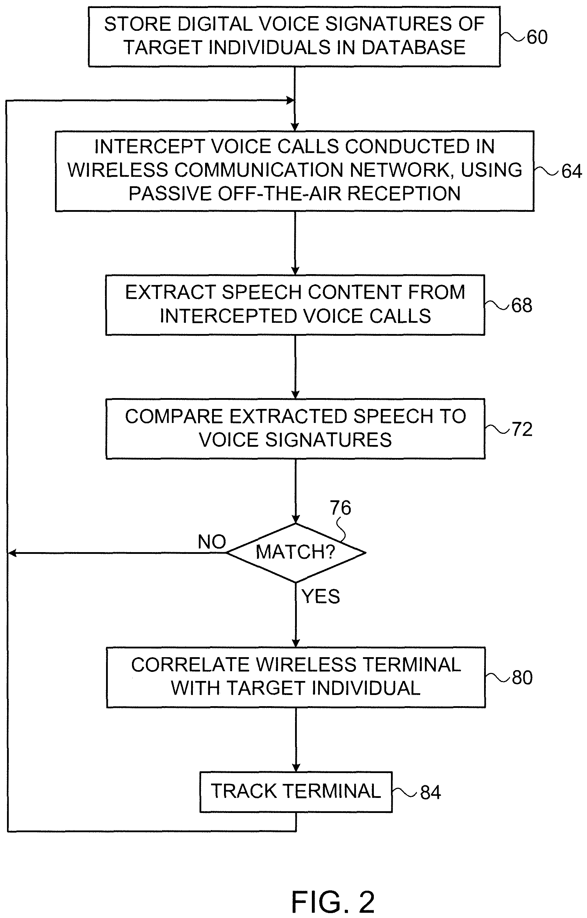

Fig. 2 is a flow chart that schematically illustrates a method for passive monitoring of wireless communication terminals, in accordance with an embodiment that is described herein. The method begins with system 20 storing digital voice signatures of target individuals in database 48, at a signature storage step 60. System 20 monitors voice call conducted by terminals 28 over network 32, at a monitoring step 64.

In the present example, the system carries out passive, off-the-air monitoring using receiver 40. In an embodiment, the system indiscriminately monitors any received voice call. In alternative embodiments, the system monitors only a certain subset of the voice calls. Typically, receiver 40 decrypts the encryption that is used to encrypt the monitored voice calls.

Receiver 40 extracts speech content from the monitored voice calls, at a speech extraction step 68. In addition, the receiver extracts identifiers of the terminals. Correlation processor 44 compares the extracted speech content with the voice signatures in database 48, at a signature correlation step 72. Any suitable correlation method can be used for this purpose.

If a match is found, as checked at a checking step 76, processor 44 associates the terminal and target individual in question, at a correlation step 80. In other words, processor 44 associates the terminal identifier (of the terminal conducting the voice calls from which the matching speech content was extracted) with the target individual (whose voice signature matched the speech content). System 20 then tracks the identified terminal, at a tracking step 84. The method loops back to step 64 for monitoring and analyzing additional voice calls. If no match is found at step 76 above, the method loops back from step 76 to step 64, and steps 80 and 84 are skipped.

It will be appreciated that the embodiments described above are cited by way of example, and that the present disclosure is not limited to what has been particularly shown and described hereinabove. Rather, the scope of the present disclosure includes both combinations and sub-combinations of the various features described hereinabove, as well as variations and modifications thereof which would occur to persons skilled in the art upon reading the foregoing description and which are not disclosed in the prior art.

The scope of the invention is defined by the appended claims.

## Claims

1. A method, comprising:
holding in a memory (48) respective digital voice signatures of individuals;
monitoring (64) voice calls conducted by wireless communication terminals (28) in a wireless communication network (32), and extracting (68) speech content from the monitored voice calls; and
identifying a wireless communication terminal (28) that is operated by one of the individuals by comparing (72) the speech content extracted from the voice calls of the terminal (28) to the voice signatures, **characterized in that** monitoring (64) the voice calls comprises extracting from the voice calls respective identifiers of the wireless communication terminals (28), and wherein identifying the wireless communication terminal comprises associating (80) between the one of the individuals and an extracted identifier of the identified wireless communication terminal (28).

2. The method according to claim 1, wherein monitoring (64) the voice calls comprises receiving wireless signals that carry the voice calls and are exchanged between the wireless communication terminals (28) and one or more base stations (36) of the wireless communication network (32) .

3. The method according to claim 1, wherein monitoring (64) the voice calls comprises receiving the voice calls passively without affecting the wireless communication network (32).

4. The method according to claim 1, wherein at least some of the voice calls in the wireless communication network (32) are encrypted, and wherein monitoring (64) the voice calls comprises decrypting the encrypted voice calls so as to enable extraction of the speech content.

5. The method according to claim 1, wherein monitoring (64) the voice calls and extracting (68) the speech content comprise indiscriminately processing all receivable voice calls.

6. The method according to claim 1, wherein the extracted identifier comprises a temporary identifier that is assigned temporarily by the wireless communication network (32) to the identified wireless communication terminal (28).

7. The method according to claim 1, and comprising outputting an association between the identified terminal (28) and the one of the individuals.

8. The method according to claim 7, and comprising tracking (84) the one of the individuals based on the association.

9. The method of claim 1 wherein the extracted identifier is Temporary Mobile Subscriber Identity (TMSI).

## Patentansprüche

1. Verfahren, umfassend:
Halten, in einem Speicher (48), von jeweiligen digitalen Sprachsignaturen von Individuen;
Überwachen (64) von Sprachanrufen, die durch drahtlose Kommunikationsendgeräte (28) in einem Drahtloskommunikationsnetz (32) durchgeführt werden, und Extrahieren (68) von Sprachinhalt aus den überwachten Sprachanrufen; und
Identifizieren eines drahtlosen Kommunikationsendgeräts (28), das durch eines der Individuen betrieben wird, durch Vergleichen (72) des Sprachinhalts, der aus den Sprachanrufen des Endgeräts (28) extrahiert wird, mit den Sprachsignaturen, **dadurch gekennzeichnet, dass** das Überwachen (64) der Sprachanrufe ein Extrahieren, aus den Sprachanrufen, von jeweiligen Kennungen der drahtlosen Kommunikationsendgeräte (28) umfasst, und wobei das Identifizieren des drahtlosen Kommunikationsendgeräts ein Assoziieren (80) zwischen dem einen der Individuen und einer extrahierten Kennung des identifizierten drahtlosen Kommunikationsendgeräts (28) umfasst.

2. Verfahren nach Anspruch 1, wobei das Überwachen (64) der Sprachanrufe ein Empfangen von Drahtlossignalen, die die Sprachanrufe führen und zwischen den drahtlosen Kommunikationsendgeräten (28) und einer oder mehreren Basisstationen (36) des Drahtloskommunikationsnetzes (32) ausgetauscht werden, umfasst.

3. Verfahren nach Anspruch 1, wobei das Überwachen (64) der Sprachanrufe ein passives Empfangen der Sprachanrufe umfasst, ohne das Drahtloskommunikationsnetz (32) zu beeinträchtigen.

4. Verfahren nach Anspruch 1, wobei zumindest manche der Sprachanrufe in dem Drahtloskommunikationsnetz (32) verschlüsselt sind und wobei das Überwachen (64) der Sprachanrufe ein Entschlüsseln der verschlüsselten Sprachanrufe umfasst, damit eine Extrahierung des Sprachinhalts ermöglicht wird.

5. Verfahren nach Anspruch 1, wobei das Überwachen (64) der Sprachanrufe und das Extrahieren (68) des Sprachinhalts ein unterschiedsloses Verarbeiten aller empfangenen Sprachanrufe umfasst.

6. Verfahren nach Anspruch 1, wobei die extrahierte Kennung eine temporäre Kennung umfasst, die temporär dem identifizierten drahtlosen Kommunikationsendgerät (28) durch das Drahtloskommunikationsnetz (32) zugewiesen wird.

7. Verfahren nach Anspruch 1 und umfassend Ausgeben einer Assoziation zwischen dem identifizierten Endgerät (28) und dem einen der Individuen.

8. Verfahren nach Anspruch 7 und umfassend Verfolgen (84) des einen der Individuen basierend auf der Assoziation.

9. Verfahren nach Anspruch 1, wobei die extrahierte Kennung eine temporäre Mobilteilnehmeridentität (TMSI) ist.

## Revendications

1. Procédé consistant :
à conserver dans une mémoire (48) des signatures vocales numériques respectives d'individus ;
à surveiller (64) des appels vocaux menés par des terminaux de communication sans fil (28) dans un réseau de communication sans fil (32) et à extraire (68) un contenu de discours des appels vocaux surveillés ; et
à identifier un terminal de communication sans fil (28) qui est commandé par l'un des individus en comparant (72) le contenu de discours extrait des appels vocaux du terminal (28) aux signatures vocales, **caractérisé en ce que** la surveillance (64) des appels vocaux consiste à extraire, des appels vocaux, des identifiants respectifs des terminaux de communication sans fil (28) et dans lequel l'identification du terminal de communication sans fil consiste à établir une association (80) entre l'un des individus et un identifiant extrait du terminal de communication sans fil identifié (28).

2. Procédé selon la revendication 1, dans lequel la surveillance (64) des appels vocaux consiste à recevoir des signaux sans fil qui transportent les appels vocaux et sont échangés entre les terminaux de communication sans fil (28) et une ou plusieurs stations de base (36) du réseau de communication sans fil (32).

3. Procédé selon la revendication 1, dans lequel la surveillance (64) des appels vocaux consiste à recevoir les appels vocaux de manière passive sans affecter le réseau de communication sans fil (32).

4. Procédé selon la revendication 1, dans lequel au moins quelques-uns des appels vocaux dans le réseau de communication sans fil (32) sont cryptés et dans lequel la surveillance (64) des appels vocaux consiste à décrypter les appels vocaux cryptés de sorte à permettre une extraction du contenu de discours.

5. Procédé selon la revendication 1, dans lequel la surveillance (64) des appels vocaux et l'extraction (68) du contenu de discours consistent à traiter indifféremment tous les appels vocaux pouvant être reçus.

6. Procédé selon la revendication 1, dans lequel l'identifiant extrait comprend un identifiant temporaire qui est attribué de manière temporaire par le réseau de communication sans fil (32) au terminal de communication sans fil identifié (28).

7. Procédé selon la revendication 1, et consistant à transmettre une association entre le terminal identifié (28) et l'un des individus.

8. Procédé selon la revendication 7, et consistant à suivre (84) l'un des individus en se basant sur l'association.

9. Procédé selon la revendication 1, dans lequel l'identifiant extrait est une identité d'abonné mobile temporaire (TMSI).
